# EUROPÄISCHE PATENTSCHRIFT

(11) **EP 3 157 790 B1**
(45) Veröffentlichungstag und Bekanntmachung des Hinweises auf die Patenterteilung: **11.07.2018**
(21) Anmeldenummer: 15724521.8
(22) Anmeldetag: 22.05.2015
(51) Int. Cl.: B60T 15/54

(54) **VENTILANORDNUNG**
VALVE ARRANGEMENT
SYSTÈME DE VANNES

(30) Priorität: 21.06.2014 DE 102014009179
(43) Veröffentlichungstag der Anmeldung: 26.04.2017
(73) Patentinhaber: WABCO GmbH, 30453 Hannover (DE)
(72) Erfinder: DIDWISZUS, Lars, 30559 Hannover (DE); SCHAPPLER, Hartmut, 30455 Hannover (DE); STEINFELD, Dieter, 30455 Hannover (DE)
(74) Vertreter: Lauerwald, Jörg
(86) Internationale Anmeldenummer: PCT/EP2015/001052
(87) Internationale Veröffentlichungsnummer: WO 2015/192937

(56) Entgegenhaltungen:
- DE-A1- 3 722 306
- DE-A1-102009 029 968
- DE-A1-102009 032 313

## Beschreibung

Die Erfindung betrifft eine Ventilanordnung zur Bremsansteuerung einer druckmittelbetriebenen Bremsanlage eines Fahrzeugs, mit wenigstens einem in einem Gehäuse angeordneten Relaisventil und wenigstens einem Magnetventil zum Ansteuern des Relaisventils, wobei das Relaisventil einen axial verschiebbaren Relaisventilkolben mit einem ringförmigen Dichtsitz aufweist, der mit einem in eine Steuerdruckkammer geleiteten und durch das wenigstens eine Magnetventil eingestellten Steuerdruck beaufschlagbar ist, mit einem axial verschiebbaren Plattenventil mit einer radialen Dichtfläche, und mit einem eine Arbeitskammer von einer Druckkammer trennenden gehäusefesten Einsatz mit einem ringförmigen Dichtsitz, der zum ringförmigen Dichtsitz des Relaisventilkolbens koaxial angeordnet ist, wobei die genannten Dichtsitze gleichzeitig oder wechselweise derartig mit der radialen Dichtfläche des Plattenventils zusammenwirken, dass beim Anlegen von Steuerdruck ein Vorratsdruck von der Druckkammer in die Arbeitskammer auf der von der Steuerdruckkammer abgewandten Seite des Relaisventilkolbens gelangt, und dass bei Entlastung des Steuerdrucks der Druck in der Arbeitskammer einem Druckmittelbehälter zurückgeführt oder zur Umgebung entlüftet wird.

Eine derartige pneumatische Ventilanordnung ist in der DE 10 2009 029 968 A1 der Anmelderin offenbart. Bei dieser Ventilanordnung befinden sich der gehäusefeste Einsatz sowie das Plattenventil in einem Gehäuseunterteil und der Relaisventilkolben koaxial dazu in einem Gehäuseoberteil. Dieses Gehäuseoberteil ist mit dem Gehäuseunterteil abgedichtet verbunden und muss gegenüber dem koaxial angeordneten Plattenventil und dem Relaisventilkolben möglichst genau ausgerichtet sein, um die Funktionsfähigkeit der Ventilanordnung zu gewährleisten. Der gehäusefeste Einsatz ist im Gehäuse mittels eines Sicherungsrings unterteilt, der in einer Nut im Gehäuseunterteil lagegesichert ist.

Die Steuerdruckzufuhr zur Arbeitskammer erfolgt über schräg verlaufende Bohrungen oder Kanäle im Gehäuseunterteil und im Gehäuseoberteil. Die Entlüftung der Arbeitskammer zur Umgebung erfolgt über eine zentrische Bohrung im Relaisventilkolben und durch einen Geräuschdämpfer, dessen Gehäuse an dem Gehäuseoberteil mittels einer Clips-Verbindung fixiert ist. Eine erste Ausführungsform der bekannten Ventilanordnung umfasst nur ein Relaisventil. Eine weitere Ausführungsform dieser Ventilanordnung weist zwei Relaisventile auf, die spiegelbildlich und koaxial zueinander angeordnet sind. Diese letztere Ausführungsform mit zwei Relaisventilen kann im Entlüftungspfad einen Geräuschdämpfer aufweisen, an den beide Relaisventile angeschlossen sind, oder jedes der Relaisventile ist an einen eigenen Geräuschdämpfer angeschlossen. Die Beaufschlagung mit Steuerdruck erfolgt für jedes Relaisventil über getrennte, schräg verlaufende Kanäle im Gehäuse.

Das Relaisventil beziehungsweise die beiden Relaisventile können wenigstens einen pneumatisch betätigbaren Bremszylinder einer pneumatisch oder elektropneumatisch betätigbaren Bremsanlage mit Druckluft versorgen. Der Steuerdruck kann ein pneumatisch, beispielsweise mittels eines Bremspedals, ausgesteuerter Druck oder ein elektropneumatisch, beispielsweise mittels Magnetventilen, ausgesteuerter Druck sein. Das Relaisventil beziehungsweise die Relaisventile stellen den Steuerdruck luftmengenverstärkt dem Bremszylinder bereit, der in Erwiderung auf eine Erhöhung des Drucks einen Bremsbelag gegen eine Bremsscheibe presst, die an einer Radwelle eines Kraftfahrzeugs angeordnet ist und infolge dessen das Rad beziehungsweise das Kraftfahrzeug abbremst. Das Relaisventil verkürzt hierbei die Ansprechdauer der Bremse beziehungsweise die Dauer bis zum Beginn eines Bremsvorgangs durch ein schnelles Belüften des Bremszylinders. Zudem ermöglicht das Relaisventil oder ermöglichen die Relaisventile ein schnelles Entlüften des oder der Bremszylinder.

Diese bekannte Ventilanordnung hat sich insbesondere hinsichtlich ihrer Funktionsweise bewährt, erfordert aber eine komplexe Bearbeitung der Druckluftkanäle, die als Schrägbohrungen ausgeführt sind, eine maschinelle Bearbeitung des Gehäuseunterteils und des Gehäuseoberteils in alle Richtungen für eine genaue Ausrichtung des Gehäuseoberteils zum Gehäuseunterteil, insbesondere wegen der Anordnung der Relaisventilkolbenlauffläche im Gehäuseoberteil und der übrigen beweglichen Komponenten im Gehäuseunterteil, so dass die Schnittstellen zueinander laufen und abgedichtet werden müssen. Bei der Montage ergeben sich unterschiedliche Montagerichtungen, so dass die Montage, ob von Hand ausgeführt oder durch einen Automaten, kompliziert ist und einen größeren Zeitaufwand erfordert. Des Weiteren ist die Ankopplung von einem oder mehreren erforderlichen Magnetventilen nicht ohne weiteres in der Weise zu standardisieren, dass sich unterschiedliche Magnetventileinheiten von unterschiedlichen Herstellern mit dem Relaisventilteil koppeln lassen. Schließlich besteht auch eine eingeschränkte Flexibilität zur Variantenbildung, beispielsweise für Einkanalsysteme oder Zweikanalsysteme, die ohne oder mit Redundanzanschlüssen versehen sein können und eine komplette Kreistrennung erlauben.

Redundanzanschlüsse sind aus Sicherheitsgründen erforderlich, wenn die Ventilanordnung durch eine elektronische Motor-Steuereinheit angesteuert wird. In diesem Fall wird bei einem Ausfall der elektronischen Motor-Steuereinheit ein von einem pedalgesteuerten Bremswertgeber gelieferter Redundanzdruck direkt dem oder den Relaisventil(en) zugeführt.

Vor diesem Hintergrund liegt der Erfindung die Aufgabe zugrunde, eine Ventilanordnung, insbesondere zur Bremsansteuerung einer druckmittelbetriebenen Bremsanlage eines Fahrzeugs der eingangs erwähnten Art vorzuschlagen, die einen verringerten Bauraum aufweist, mit einer geringeren Bauteilanzahl auskommt, zu einer vereinfachten Montage mit Verzicht auf kritische Montageprozesse führt und eine einfache und klare Schnittstelle zwischen dem Relaisventilteil und einer Magnetventileinheit aufweist.

Gelöst wird diese Aufgabe durch eine Ventilanordnung mit den Merkmalen des Anspruchs 1. Vorteilhafte Weiterbildungen sind in den Unteransprüchen definiert.

Demnach geht die Erfindung aus von einer Ventilanordnung zur Bremsansteuerung einer druckmittelbetriebenen Bremsanlage eines Fahrzeugs, mit wenigstens einem in einem Gehäuse angeordneten Relaisventil und wenigstens einem Magnetventil zum Ansteuern des Relaisventils, wobei das Relaisventil einen axial verschiebbaren Relaisventilkolben mit einem ringförmigen Dichtsitz aufweist, der mit einem in eine Steuerdruckkammer geleiteten und durch das wenigstens eine Magnetventil eingestellten Steuerdruck beaufschlagbar ist, mit einem axial verschiebbaren Plattenventil mit einer radialen Dichtfläche, und mit einem eine Arbeitskammer von einer Druckkammer trennenden gehäusefesten Einsatz mit einem ringförmigen Dichtsitz, der zum ringförmigen Dichtsitz des Relaisventilkolbens koaxial angeordnet ist, wobei die genannten Dichtsitze gleichzeitig oder wechselweise derartig mit der radialen Dichtfläche des Plattenventils zusammenwirken, dass beim Anlegen von Steuerdruck ein Vorratsdruck von der Druckkammer in die Arbeitskammer auf der von der Steuerdruckkammer abgewandten Seite des Relaisventilkolbens gelangt, und dass bei Entlastung des Steuerdrucks der Druck in der Arbeitskammer einem Druckmittelbehälter zurückgeführt oder zur Umgebung entlüftet wird.

Zur Lösung der gestellten Aufgabe ist vorgesehen, dass das Gehäuse wenigstens eine einseitig geschlossene, die Steuerdruckkammer, die Arbeitskammer und die Druckkammer bildende zylindrische Aufnahme zur Anordnung des Relaisventilkolbens, des gehäusefesten Einsatzes sowie eines Trägerelements für das Plattenventil aufweist, welche in der genannten Reihenfolge axial in die Aufnahme einführbar sowie darin fixierbar sind.

Durch diese Anordnung ergibt sich nur eine Montagerichtung für die Elemente des Relaisventils, wodurch die Montage der Ventilanordnung vereinfacht ist. Es sind zudem keine kritischen Herstellprozesse, wie etwa das Einsetzen von Sicherungsringen mittels einer Sicherungsringpresse erforderlich, und der notwendige Bauraum kann vergleichsweise klein gehalten werden, was zu einer Gewichtsersparnis führt. Außerdem wird die Anzahl der notwendigen Bauteile im Vergleich zu bekannten Ventilanordnungen verringert.

Eine einfache und eindeutige Schnittstelle vom Relaisventil zu einer Magnetventileinheit lässt sich dadurch schaffen, dass das wenigstens eine Magnetventil am Gehäuse auf der geschlossenen Seite der Aufnahme für den Relaisventilkolben, den Einsatz und das Trägerelement für das Plattenventil angeordnet ist, und dass Verbindungskanäle zwischen dem wenigstens einen Magnetventil und dem wenigstens einen Relaisventil, zwischen dem wenigstens einen Magnetventil und einem Vorratsdruckanschluss sowie zwischen dem wenigstens einen Magnetventil und einem Druckentlastungsbereich, beispielsweise zu einem Geräuschdämpfer hin, im Gehäuse im Wesentlichen achsparallel oder senkrecht zur Längsachse der topfförmigen Aufnahme für den Relaisventilkolben, den Einsatz und das Trägerelement verlaufen.

Hierdurch ergeben sich eine Druckübergabe von der Magnetventileinheit zum Relaisteil in Längsachsrichtung direkt über dem Relaisteil sowie eine einfache Dichtgeometrie in Form einer Axialdichtung zur Magnetventileinheit. Die Magnetventile lassen sich unabhängig von der Position der Funktionsbereiche im Relaisteil anordnen, indem eine entsprechend angepasste Druckverteilerplatte zwischen der Magnetventileinheit und dem Relaisteil angeordnet ist. Dadurch lassen sich das wenigstens eine oder mehrere Magnetventile sowohl senkrecht als auch parallel zur Druckübergabeebene anordnen.

Die Relaisteilkomponenten, wie Relaisventilkolben, Plattenventil und gehäusefester Einsatz, lassen sich als Vormontagebaugruppen zusammenfügen sowie als Einheit in die im Gehäuse vorgesehene topfförmige Aufnahme einschieben, und sie brauchen nicht durch einen Sicherungsring axial gesichert zu werden.

Das Gehäuse lässt sich als Druckgussteil aus Metall oder als Spritzgussteil aus Kunststoff herstellen und ermöglicht die Verwendung einfacher Formwerkzeuge durch deutlich vereinfachte Druckguss- beziehungsweise Spritzgussgeometrien. Die noch gegebenenfalls notwendige maschinelle Bearbeitung ist deutlich reduziert und vereinfacht, ebenso die Montage der erfindungsgemäßen Ventilanordnung. Aufgrund der kompakteren Bauform ergibt sich eine Verringerung der Steuerluftvolumina, was zu einer besseren und schnelleren Regelung des Relaisventils führt. Die Druckentlastung beziehungsweise die Druckentlüftung der Magnetventileinheit und des wenigstens einen Relaisventils sind vollständig voneinander getrennt, so dass sie sich nicht gegenseitig beeinflussen, und zudem eine verringerte Geräuschentwicklung zu verzeichnen ist.

Besonders vorteilhaft ist es, dass das wenigstens eine Magnetventil und das wenigstens eine Relaisventil getrennte Kanäle für die Steuerdruckzufuhr und die Steuerdruckentlastung aufweisen können, wodurch keine gegenseitige Beeinflussung entstehen kann.

Da die topfförmige Aufnahme für den Relaisventilkolben, das Plattenventil und den gehäusefesten Einsatz vor dem Zusammenbau nur von einer Seite geöffnet ist, lässt sie sich auch auf einfachste Weise mittels einer Siebplatte verschließen, welche die erwähnten Elemente des Relaisventils in der Aufnahme fixiert und den Durchtritt der Druckluft bei Druckentlastung, wenn es sich um eine pneumatische Ventilanordnung handelt, zulässt. Die Siebplatte kann an das Gehäuse angeschraubt sein, oder sie kann quer zur Aufnahme in einen Schlitz im Gehäuse eingeschoben sein, wonach sich die Siebplatte entweder mittels wenigstens einer Befestigungsschraube im Schlitz fixieren lässt, oder die Siebplatte weist eine Rastnase auf, die eine Schlitzbegrenzung im eingeschobenen Zustand der Siebplatte hintergreift.

Bei Verwendung einer Siebplatte in den vorerwähnten Ausführungsformen kann das Trägerelement einen Aufnahmeraum für einen Geräuschdämpfer, der aus einem Gewirk oder Gestrick oder Vlies aus Kunststoff und/oder Metallfäden bestehen kann, aufweisen, wobei der Geräuschdämpfer in den Aufnahmeraum eingeklebt sein kann oder auch nur eingesetzt sein kann und dann durch die Siebplatte in seiner Position gehalten wird.

Alternativ dazu kann die Aufnahme mit dem eingeführten Relaisventilkolben, dem Einsatz und dem Trägerelement mittels eines in einem Gehäuse angeordneten Geräuschdämpfers mit dem Gehäuse der Ventilanordnung lösbar verbindbar verschlossen sein, so dass die in die Aufnahme eingeführten Relaisventilelemente dadurch fixiert sind.

Die vorerwähnte Aufgabe wird des Weiteren durch ein Fahrzeug, insbesondere ein Nutzfahrzeug, gelöst, dass wenigstens eine Ventilanordnung mit den vorstehend definierten Merkmalen aufweist.

Schließlich wird die eingangs erwähnte Aufgabe auch durch die Verwendung wenigstens einer als Achsmodulator oder als elektronische Luftaufbereitungseinrichtung oder als elektromagnetische Feststellbremseinrichtung ausgebildete Ventilanordnung entsprechend den vorstehend definierten Merkmalen in einem Druckluftsystem eines Fahrzeugs gelöst.

Die Erfindung wird nachstehend anhand eines in der Zeichnung dargestellten Ausführungsbeispiels weiter erläutert. In der Zeichnung zeigt
Fig. 1 eine perspektivische Ansicht einer gemäß der Erfindung ausgebildeten Ventilanordnung,
Fig. 2 eine Schnittansicht durch die Ventilanordnung gemäß Fig. 1,
Fig. 3 eine Teilschnittansicht der Ventilanordnung im Bereich eines Relaisventils,
Fig. 4 einen um 90° gegenüber Fig. 3 gedrehten Teilschnitt durch die Ventilanordnung gemäß Fig. 1 im Bereich eines Relaisventils,
Fig. 5 eine schematische Darstellung der Anordnung der Kanäle zwischen den Magnetventilen und den Relaisventilen,
Fig. 6 eine perspektivische Ansicht von unten auf die Ventilanordnung mit einer zweiten Ausführungsform einer Siebplatte, und
Fig. 7 eine perspektivische Ansicht von unten auf die Ventilanordnung mit einer dritten Ausführungsform einer Siebplatte.

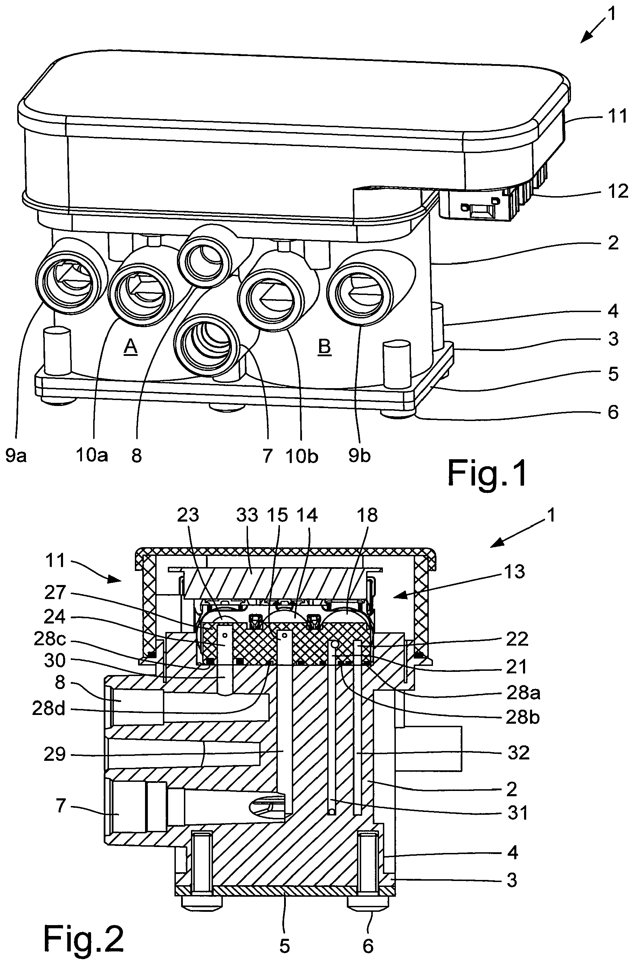

Fig. 1 zeigt demnach eine Ventilanordnung 1 gemäß einem Ausführungsbeispiel der Erfindung. Die Ventilanordnung 1 weist ein Zwei-Kanal-Ventilsystem mit einem Bereich A für einen ersten Kanal und einen Bereich B für einen zweiten Kanal auf, die in einem gemeinsamen Gehäuse 2 zusammengefasst sind. Das Gehäuse 2 ist mit einem Flansch 3 versehen, an dem eine Siebplatte 5 mittels sechs Befestigungsschrauben 6 fixiert ist. Da die Bereiche A und B des Gehäuses 2 im Wesentlichen zylindrisch ausgebildet sind, sind am Flansch zur Aufnahme der sechs Befestigungsschrauben 6 entsprechende Verstärkungen 4 mit Gewindebohrungen angeordnet. Das Gehäuse 2 weist etwa mittig einen Anschluss 7 für Vorratsdruck, axial darüber einen Anschluss 8 für Redundanzdruck und seitlich davon an jedem der Bereiche A und B jeweils einen ersten Ausgang 9a; 9b und einen zweiten Ausgang 10a; 10b für Bremsdruck auf, die über nicht dargestellte Leitungen mit den Radbremsen jeweils einer Fahrzeugachse verbunden sind.

An der Oberseite des Gehäuses 2 sind eine Magnetventileinheit 11 und ein Elektronikmodul 33 angeordnet, wobei letzteres über elektrische Steckverbindungen 12 und eine nicht dargestellte Leitung mit einer nicht gezeigten Motor-Steuereinheit verbunden ist. Das Elektronikmodul 33 ist dabei oberhalb der Magnetventile 14, 18, 23 angeordnet und wird bei dessen Montage auf die Magnetventile 14, 18, 23 sowie die elektrischen Steckverbindungen 12 aufgepresst. Innerhalb der Magnetventileinheit 11 ist ein Magnetventilblock 13 angeordnet, der in Fig. 2 in einer Schnittdarstellung gezeigt ist.

Der Magnetventilblock 13 weist ein erstes Magnetventil 14 auf, das über den Anschluss 7 für Vorratsdruck, einen Verbindungskanal 29 für Vorratsdruck und einen Einlasskanal 15 entsprechenden Vorratsdruck von einem nicht dargestellten Druckbehälter empfängt und diesen Vorratsdruck taktweise moduliert über einen ersten Auslasskanal 16 sowie einem zweiten Auslasskanal 17 für Steuerdruck jeweils einem im Bereich A beziehungsweise einem im Bereich B angeordneten Relaisventil 72 zuführt.

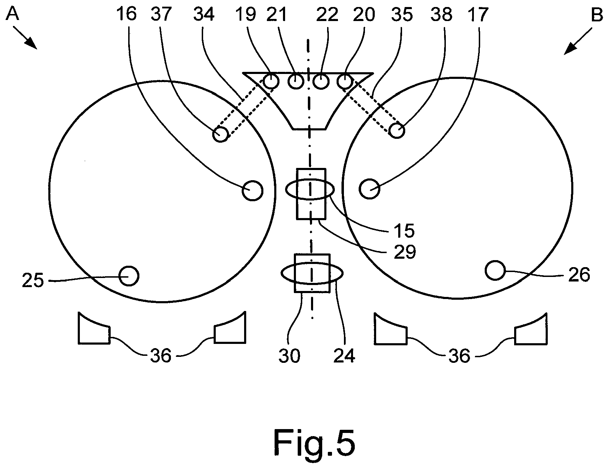

Ein parallel zum ersten Magnetventil 14 angeordnetes zweites Magnetventil 18 dient dazu, den in das Relaisventil 72 eingeführten Steuerdruck gesteuert zu entlüften. Hierzu weist das zweite Magnetventil 18 einen ersten Eingang 19 und einen zweiten Eingang 20 auf, die über einen ersten, schrägen Steuerdruckkanal 34 und einen zweiten Steuerdruckkanal 35 mit jeweils einer ersten Steuerdrucköffnung 37 und einer zweiten Steuerdrucköffnung 38 der Relaisventile 72 in den Bereichen A und B in Verbindung stehen (Fig. 5).

Das zweite Magnetventil 18 steuert taktweise die Entlüftung des Steuerdrucks aus den Relaisventilen 72, indem es eine Verbindung zwischen dem ersten Eingang 19 zum zweiten Magnetventil 18 und dem ersten Auslass 21 des zweiten Magnetventils 18 beziehungsweise zwischen dem zweiten Eingang 20 des zweiten Magnetventils 18 und dem zweiten Auslass 22 des zweiten Magnetventils 18 öffnet oder schließt, wodurch Steuerdruck über in Fig. 2 dargestellte erste und zweite Auslasskanäle 31, 32 im Gehäuse 2 in einen Entlüftungsbereich der Ventilanordnung 1 gelangt.

Ein drittes paralleles Magnetventil 23 empfängt Redundanzdruck, der über den Anschluss 8 für Redundanzdruck und einen Verbindungskanal 30 zu einem Einlasskanal 24 für Redundanzdruck des dritten Magnetventils 23 gelangt. Das dritte Magnetventil 23 leitet den Redundanzdruck gesteuert über einen ersten Auslass 25 und über einen zweiten Auslass 26 zu den Relaisventilen 72 in den Bereichen A und B der Ventilanordnung 1.

Die genannten Kanäle 15, 16, 17, 16, 24 sowie die Eingänge 19, 20 und die Auslässe 21, 22 sind in einem Verteilergehäuse 27 mittig angeordnet. Die Umgebung dieser Kanäle, ebenso wie die der Auslässe 25, 26 für Redundanzdruck, sind in einer Ebene glatt bearbeitet und weisen Ringnuten zur Aufnahme von Dichtringen 28a, 28b, 28c auf, wie in Fig. 2 zeigt.

Die drei Magnetventile 14, 18, 23 mit dem Verteilergehäuse 27 und den Bereichen der Auslässe 25, 26 für Redundanzdruck sind in geeigneter Weise gegen das Gehäuse 2 der Ventilanordnung 1 gepresst und gegenüber den Kanälen 29, 30, 31, 32 sowie einem weiteren, nicht dargestellten und zu den Relaisventilen 72 in den Bereichen A und B der Ventilanordnung 1 führenden Kanal positioniert sowie fixiert. Das Verteilergehäuse 27 kann dazu mittels nicht dargestellter Schrauben direkt an dem Gehäuse 2 festgeschraubt sein.

An den Ausgängen 9, 10 in den Bereichen A und B der Ventilanordnung 1 können, wie in Fig. 5 dargestellt, Drucksensoranschlüsse 36 für nicht dargestellte Drucksensoren vorhanden sein.

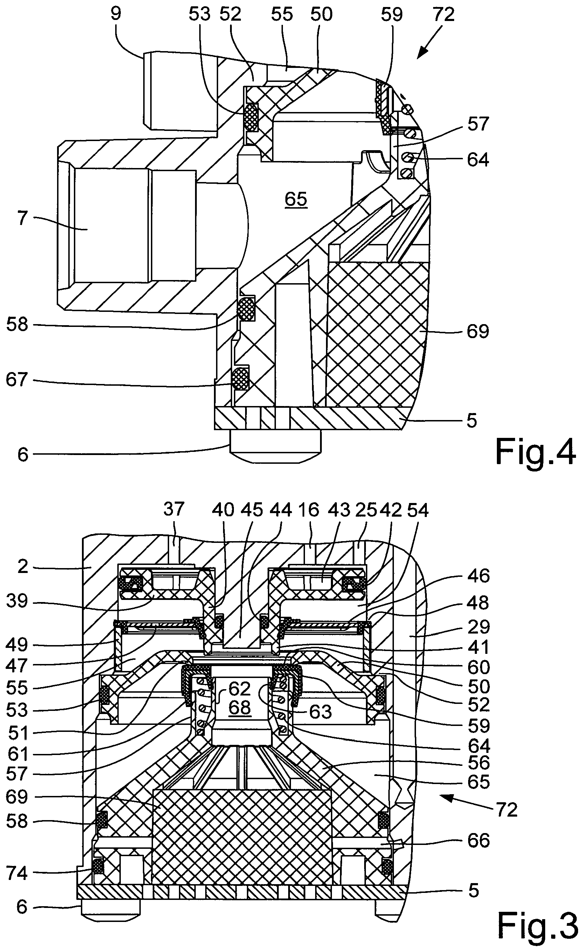

Aus den Figuren 3 und 4 geht der Aufbau eines Relaisventils 72 hervor, von denen in den Bereichen A und B der Ventilanordnung 1 jeweils eines für je einen Kanal vorgesehen sind.

Im Gehäuse 2 ist in jedem Bereich A und B ein Raum zur Aufnahme der Bauelemente für ein Relaisventil 72 vorgesehen. Diese Bauelemente bestehen aus einem Relaisventilkolben 39, einer Prallplatte 46, einem Einsatz 50, einem Plattenventil 59, einem Trägerelement 56 und einem Geräuschdämpfer 69. Der Einsatz 50 ist radial innen als Ventilsitz für das Plattenventil 59 ausgebildet und bevorzugt aus einem Kunststoff hergestellt, welches das Gesamtgewicht sowie die Herstellkosten des Relaisventils 72 in Vergleich zu einer Metallausführung reduziert.

Der Relaisventilkolben 39 ist an einem zentrisch angeordneten zylindrischen Führungszapfen 45 des Gehäuses 2 mittels eines hohlzylindrischen Führungsabschnitts 40 geführt. Der Relaiskolben 39 ist gegenüber dem Gehäuse 2 mittels eines Z-Dichtrings 42 und gegenüber dem zylindrischen Führungszapfen 45 mittels eines Dichtrings 44 abgedichtet geführt.

Zwischen einer Oberseite des Relaisventilkolbens 39 und dem Gehäuse 2 ist eine Steuerdruckkammer 43 gebildet, der über das erste Magnetventil 14 zu einem Steuerdruck taktweise modulierter Vorratsdruck über den ersten Auslasskanal 16 zugeführt wird. Der weitere, erste Auslass 25 des dritten Magnetventils 23 dient dazu, der Steuerdruckkammer 43 Redundanzdruck zuzuführen oder daraus abzuführen. Die erste Steuerdrucköffnung 37 dient dazu, den Steuerdruck aus der Steuerdruckkammer 43 bei Bedarf zu entlüften.

Axial beabstandet zum Relaisventilkolben 39 ist eine Prallplatte 46 angeordnet, die gegenüber der hohlzylindrischen Führung 40 des Relaisventilkolbens 39 mittels eines nicht weiter bezeichneten Dichtmittels abgedichtet ist und an einem ersten Absatz 48 im Gehäuse 2 fest anliegt.

Über eine Druckausgleichsbohrung 47 erfolgt ein Druckausgleich zwischen einer oberen Kammer 54 und einer unteren Kammer 55, die zusammen eine Arbeitskammer bilden. Die Prallplatte 46 dient dazu, die Bewegung des Relaisventilkolbens 39 zu dämpfen, da Luft aus der oberen Kammer 54 nur durch die Druckausgleichsbohrung 47 in die untere Kammer 55 gelangen kann, wenn sich der Relaisventilkolben 39 bei Druckbeaufschlagung der Steuerdruckkammer 43 nach unten bewegt oder sich bei einem Druckanstieg in der unteren Kammer 55 wieder nach oben bewegt. Die Prallplatte 46 wirkt somit einem Überschwingen des Relaisventilkolbens 39 entgegen und verkürzt einen Einschwingvorgang beim Aussteuern des Drucks, der beispielsweise den Bremsen eines Fahrzeugs über die Ausgänge 9, 10 nach Maßgabe des Steuerdrucks in der Steuerdruckkammer 43 zugeführt wird. Wenn eine Dämpfung der Bewegung des Relaisventilkolbens 39 nicht erforderlich ist, kann die Prallplatte 46 ohne Einfluss auf die Erfindung entfallen.

Die Prallplatte 46 wird durch einen Stützzylinder 49, der sich einerseits an dem Einsatz 50 und andererseits an der Prallplatte 46 abstützt, gegen den ersten Absatz 48 im Gehäuse 2 gehalten. Der Stützzylinder 49 kann aber auch ein unmittelbarer Bestandteil des Einsatzes 50 sein, also mit diesem einstückig sowie stoffeinheitlich hergestellt sein.

Die durch die obere Kammer 54 und die untere Kammer 55 gebildete Arbeitskammer ist von einer Druckkammer 65 im unteren Bereich des Gehäuses 2 durch den Einsatz 50 getrennt. Dieser Einsatz 50 liegt radial außen an einem zweiten Absatz 52 im Gehäuse 2 an und ist gegenüber dem Gehäuse 2 mittels eines Dichtrings 53 abgedichtet. Der Einsatz 50 weist radial innen einen ringförmigen Dichtsitz 51 auf, an dem ein radial äußerer Bereich einer radialen Dichtfläche 60 eines Plattenventils 59 anliegt.

Ein radial innerer Bereich der radialen Dichtfläche 60 wirkt mit einem ringförmigen Dichtsitz 41 am Ende der hohlzylindrischen Führung 40 zusammen, wenn der Relaisventilkolben 39 aufgrund der Zufuhr von Steuerdruck mit seinem ringförmigen Dichtsitz 41 auf die radiale Dichtfläche 60 des Plattenventils 59 abgesenkt ist.

Das Plattenventil 59 ist koaxial zum Relaisventilkolben 39 in Gehäuse 2 angeordnet und gegen den Druck einer Druckfeder 64 auf einer hohlzylindrischen Führung 57 sowie einem koaxialen hohlzylindrischen Fortsatz 62 mittels zwei jeweils zugeordneten Dichtlippen 61 und 63 abgedichtet geführt. Die zylindrische Führung 57 und der zylindrische Fortsatz 62 sind Bestandteil des Trägerelements 56, welches das Relaisventil 72 nach unten abschließt und dementsprechend gegenüber dem Gehäuse 2 mittels Dichtringe 58 und 67 abgedichtet ist.

Zwischen dem Einsatz 50 und dem Trägerelement 56 ist eine ringförmige Druckkammer 65 gebildet, die über den Anschluss 7 mit Vorratsdruck von einem nicht dargestellten Vorratsdruckbehälter beaufschlagt ist. Der Verbindungskanal 29 für Vorratsdruck, der in Fig. 2 dargestellt ist, ist in Fig. 3 seitlich vom Relaisventil 72 dargestellt, da die Schnittdarstellung der Fig. 3 gegenüber der Schnittdarstellung in Figur 2 um 90° gedreht ist.

Der innere Bereich des zylindrischen Fortsatzes 62 bildet eine Entlüftungsbohrung 68 für die aus der oberen Kammer 54 und der unteren Kammer 55 gebildeten Arbeitskammer, die in einen erweiterten Raum im Trägerelement 56 übergeht, in dem ein Geräuschdämpfer 69 in Form eines Dämpfungsvlies oder eines Dämpfungsmaterialgestricks aus Kunststofffäden und/oder Metallfäden in einem Aufnahmeraum 74 angeordnet ist. Diesem Geräuschdämpfer 69 wird auch die von dem zweiten Magnetventil 18 ankommende, durch die Auslasskanäle 31, 32 abströmende Luft über Radialentlüftungskanäle 66 zugeführt. Nach unten wird das Gehäuse 2 durch die bereits erwähnte Siebplatte 5 abgeschlossen, die mittels der Befestigungsschrauben 6 am Gehäuse 2 befestigt ist.

Diese Siebplatte 5 definiert die axiale Position des Trägerelements 56, welches durch den in der Druckkammer 65 herrschenden Vorratsdruck gegen die Siebplatte 5 gepresst wird.

Die Position des Einsatzes 50 wird durch einen zweiten Absatz 52 im Gehäuse 2 bestimmt, gegen den der Einsatz 50 ebenfalls durch den in der Druckkammer 65 herrschenden Vorratsdruck gepresst wird.

Die Position der Prallplatte 46 ist durch den ersten Absatz 48 im Gehäuse 2 bestimmt, gegen den die Prallplatte 46 durch den Stützzylinder 49 und den Einsatz 50 gepresst wird.

Die Arbeitsweise des Relaisventils 72 ist die gleiche, wie die des in der DE 10 2009 029 968 A1 beschriebenen Relaisventils. Wenn Steuerdruck, durch das erste Magnetventil 14 taktweise moduliert, über den ersten Auslasskanal 16 in die Steuerdruckkammer 43 gelangt, bewegt sich der Relaisventilkolben 39 axial nach unten, und sein ringförmiger Dichtsitz 41 setzt auf die radiale Dichtfläche 60 des Plattenventils 59 auf und verschiebt das Plattenventil 59 gegen den Druck der Druckfeder 64, so dass es vom ringförmigen Dichtsitz 51 am Einsatz 50 abhebt. Hierdurch wird eine Verbindung zwischen der Druckkammer 65 für Vorratsdruck und der durch die obere Kammer 54 und die untere Kammer 55 gebildeten Arbeitskammer unterhalb des Relaisventilkolbens 39 geöffnet, so dass dort der Druck so lange ansteigt, bis der Relaisventilkolben 39 wieder nach oben zurückgedrängt wird und sich die radiale Dichtfläche 60 des Plattenventils 59 wieder an den ringförmigen Dichtsitz 51 am Einsatz 50 anlegt. Der Druck in der durch die obere Kammer 54 und die untere Kammer 55 gebildeten Arbeitskammer ist eine Funktion des in der Steuerdruckkammer 43 herrschenden Drucks und gelangt über die Ausgänge 9, 10 und entsprechenden Leitungen zu nicht dargestellten Radbremsen einer Fahrzeugachse. Dieser Bremsdruck erhöht sich, wenn über den ersten Auslasskanal 16 der Druck in der Steuerdruckkammer 43 erhöht wird, indem die Verbindung zwischen der Druckkammer 65 und der durch die obere Kammer 54 und die untere Kammer 55 gebildeten Arbeitskammer wieder geöffnet wird, bis erneut Druckgleichgewicht zwischen der Steuerdruckkammer 43 und der durch die obere Kammer 54 und die untere Kammer 55 gebildeten Arbeitskammer herrscht.

Umgekehrt lässt sich der Bremsdruck herabsetzen, indem Steuerdruck aus der Steuerdruckkammer 43 über den ersten Auslass 25 des zweiten Magnetventils 18 abgeführt wird.

Die Zufuhr des Steuerdrucks über den ersten Auslass 16 in die Steuerdruckkammer 43 wird durch das erste Magnetventil 14 gesteuert, welches mit Vorratsdruck über den Einlasskanal 15 beaufschlagt ist, während die Entlüftung der Steuerdruckkammer 43 durch das zweite Magnetventil 18 über die erste Steuerdrucköffnung 37 im Gehäuse 2, den ersten Steuerdruckkanal 34 zum ersten Eingang 19 zum zweiten Magnetventil 18 im Verteilergehäuse 27 sowie von dort, gesteuert durch das zweite Magnetventil 18, zum ersten Auslass 21 des zweiten Magnetventils 18 und weiter zum ersten Auslasskanal 31 im Gehäuse 2 sowie von dort über den Radialentlüftungskanal 6 zum Geräuschdämpfer 69 erfolgt. Während bei herkömmlichen Ventilanordnungen zur Bremsansteuerung eines Fahrzeugs die Belüftung sowie die Entlüftung der Steuerkammer durch dieselbe Bohrung erfolgt, kann durch die gerade beschriebene Trennung von Belüftung und Entlüftung der Querschnitt der Belüftungs- und Entlüftungsbohrungen zur Steuerklammer unterschiedlich sein, um so beispielsweise die Regelgüte der Ventilanordnung zu optimieren.

Aus Sicherheitsgründen lässt sich das Relaisventil 72 direkt durch den so genannten Redundanzdruck ansteuern, sofern die elektronische Steuerung ausfällt. In diesem Fall öffnet das dritte Magnetventil 23 für Redundanzdruck eine Verbindung vom Einlasskanal 24 für Redundanzdruck zu dem ersten Auslass 25 und für den zweiten Auslass 26 des dritten Magnetventils 23 für Redundanzdruck zur Steuerdruckkammer 43, so dass der Relaisventilkolben 39 durch den Redundanzdruck angesteuert wird, der beispielsweise von einem nicht dargestellten, pedalbetätigten Bremswertgeber kommen kann. Beim Ausfall der Motor-Steuereinheit sind die drei Magnetventile 14, 18, 23 unbestromt, und die beiden Magnetventile 14, 18 verharren in einer Schaltstellung, in der die Verbindung zwischen den Kanälen 15, 16, 17 des ersten Magnetventils 14 und die Kanäle 19, 20, 21, 22 des zweiten Magnetventils 18 voneinander getrennt sind, während bei unbestromtem dritten Magnetventil 23 die Verbindung zwischen dem Einlasskanal 24 für Redundanzdruck und den Auslässen 25, 26 des dritten Magnetventils 23 geöffnet sind.

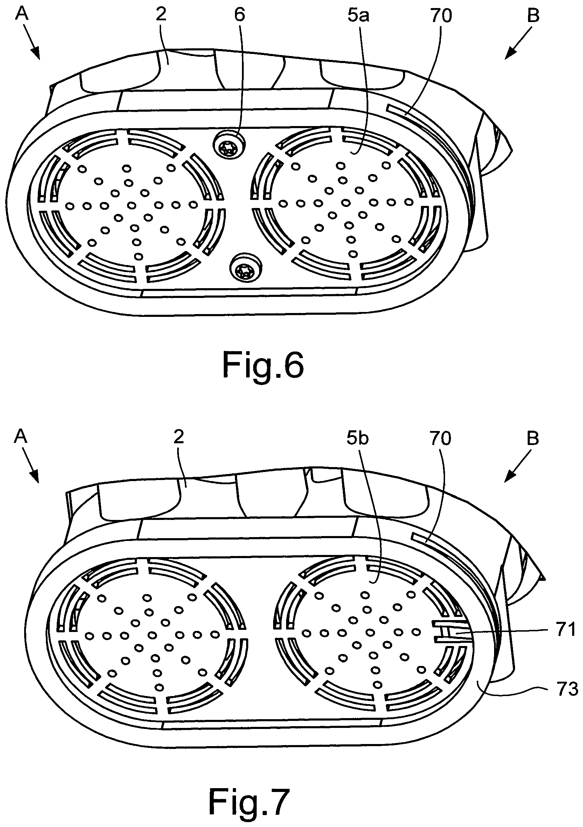

In Fig. 6 ist eine zweite Ausführungsform einer Siebplatte 5a dargestellt, die durch einen seitlichen Schlitz 70 in das Gehäuse 2 eingeschoben und in der dargestellten Stellung durch zwei Befestigungsschrauben 6 fixiert ist.

Auf die beiden Befestigungsschrauben 6 kann verzichtet werden, wenn eine in Fig. 7 dargestellte Siebplatte 5b mit einer Rastnase 71 versehen ist, die nach dem Einschieben der Siebplatte 5b durch den Schlitz 70 hinter eine Schlitzbegrenzung 73 greift und so die Siebplatte 5b in der dargestellten Stellung fixiert.

Statt den Geräuschdämpfer 69 in das Trägerelement 56 zu integrieren und die Elemente des Relaisventils 72 durch die Siebplatte 5, 5a, 5b im Gehäuse 2 zu fixieren, ist es auch möglich, einen Geräuschdämpfer, wie in der DE 10 2009 029 968 A1 dargestellt und beschrieben, zu verwenden und das Gehäuse 2 zur Aufnahme eines derartigen Geräuschdämpfers gemäß dieser Druckschrift auszubilden. Einzelheiten eines solchen Geräuschdämpfers sowie der Anordnung am Gehäuse 2 der Ventilanordnung 1 lassen sich aus dieser Druckschrift entnehmen, deren diesbezüglicher Inhalt hier vollständig zum Gegenstand der Offenbarung gemacht ist, so dass Zeichnungen dieses Geräuschdämpfers und der Anpassung des Gehäuses hier nicht erforderlich sind.

Wird von der erfindungsgemäßen Ventilanordnung 1 nur eine Ein-Kanal-Version benötigt, so dass auch nur ein Relaisventil 72 im Gehäuse 2 untergebracht werden muss, kann auf den Bereich B des Gehäuses 2 verzichtet werden, so dass das Gehäuse 2 nur den Bereich A mit einem Anschluss 7 für den Vorratsdruck, einem Anschluss 8 für den Redundanzdruck und die Ausgänge 9, 10 zu Elementen einer druckmittelbetriebenen Bremsanlage eines Fahrzeugs aufweist. Auch die Magnetventileinheit 11 ist entsprechend halbiert und verkleinert, da nur ein Relaisventil 72 mit Steuerdruck und Redundanzdruck versorgt werden muss und auch nur die halbe Anzahl der Entlüftungskanäle benötigt wird.

### Bezugszeichenliste (Bestandteil der Bescheibung)

- 1: Ventilanordnung
- 2: Gehäuse
- 3: Flansch
- 4: Verstärkung mit Gewindebohrung
- 5: Siebplatte
- 5a: Siebplatte
- 5b: Siebplatte
- 6: Befestigungsschrauben
- 7: Anschluss für Vorratsdruck
- 8: Anschluss für Redundanzdruck
- 9a, 9b: Erster Ausgang für Bremsdruck
- 10a, 10b: Zweiter Ausgang für Bremsdruck
- 11: Magnetventileinheit
- 12: Elektrische Steckverbindung
- 13: Magnetventilblock
- 14: Erstes Magnetventil
- 15: Einlasskanal für Vorratsdruck
- 16: Erster Auslasskanal für Steuerdruck
- 17: Zweiter Auslasskanal für Steuerdruck
- 18: Zweites Magnetventil
- 19: Erster Eingang zum Magnetventil 18
- 20: Zweiter Eingang zum Magnetventil 18
- 21: Erster Auslass vom Magnetventil 18
- 22: Zweiter Auslass vom Magnetventil 18
- 23: Drittes Magnetventil für Redundanzdruck
- 24: Einlasskanal für Redundanzdruck
- 25: Erster Auslass des Magnetventils 23
- 26: Zweiter Auslass des Magnetventils 23
- 27: Verteilergehäuse
- 28a: Dichtring
- 28b: Dichtring
- 28c: Dichtring
- 28d: Dichtring
- 29: Verbindungskanal für Vorratsdruck
- 30: Verbindungskanal für Redundanzdruck
- 31: Erster Auslasskanal im Gehäuse 2
- 32: Zweiter Auslasskanal im Gehäuse 2
- 33: Elektronikmodul
- 34: Erster schräger Steuerdruckkanal
- 35: Zweiter schräger Steuerdruckkanal
- 36: Drucksensoranschluss
- 37: Erste Steuerdrucköffnung
- 38: Zweite Steuerdrucköffnung
- 39: Relaisventilkolben
- 40: Hohlzylindrischer Führungsabschnitt am Relaisventilkolben
- 41: Ringförmiger Dichtsitz
- 42: Z-Dichtring
- 43: Steuerdruckkammer
- 44: Dichtring
- 45: Zylindrischer Führungszapfen
- 46: Prallplatte
- 47: Druckausgleichsbohrung
- 48: Erster Absatz im Gehäuse 2
- 49: Stützzylinder
- 50: Einsatz
- 51: Ringförmiger Dichtsitz
- 52: Zweiter Absatz im Gehäuse 2
- 53: Dichtring
- 54: Obere Kammer
- 55: Untere Kammer
- 56: Trägerelement
- 57: Zylindrische Führung
- 58: Dichtring
- 59: Plattenventil
- 60: Radiale Dichtfläche
- 61: Dichtlippe an der zylindrischen Führung 57
- 62: Koaxialer, zylindrischer Fortsatz
- 63: Dichtlippe am zylindrischen Fortsatz 62
- 64: Druckfeder
- 65: Druckkammer für Vorratsdruck
- 66: Radialentlüftungskanal
- 67: Dichtring
- 68: Entlüftungsbohrung
- 69: Geräuschdämpfer
- 70: Schlitz
- 71: Rastnase
- 72: Relaisventil
- 73: Schlitzbegrenzung
- 74: Aufnahmeraum

## Patentansprüche

1. Ventilanordnung (1) zur Bremsansteuerung einer druckmittelbetriebenen Bremsanlage eines Fahrzeugs, mit wenigstens einem in einem Gehäuse (2) angeordneten Relaisventil (72) und wenigstens einem Magnetventil (14, 18, 23) zum Ansteuern des Relaisventils (72), wobei das Relaisventil (72) einen axial verschiebbaren Relaisventilkolben (39) mit einem ringförmigen Dichtsitz (41) aufweist, der mit einem in eine Steuerdruckkammer (43) geleiteten und durch das wenigstens eine Magnetventil (14, 18, 23) eingestellten Steuerdruck beaufschlagbar ist, mit einem axial verschiebbaren Plattenventil (59) mit einer radialen Dichtfläche (60), und mit einem eine Arbeitskammer (54, 55) von einer Druckkammer (65) trennenden gehäusefesten Einsatz (50) mit einem ringförmigen Dichtsitz (51), der zum ringförmigen Dichtsitz (41) des Relaisventilkolbens (39) koaxial angeordnet ist, wobei die genannten Dichtsitze (41, 51) gleichzeitig oder wechselweise derartig mit der radialen Dichtfläche (60) des Plattenventils (59) zusammenwirken, dass beim Anlegen von Steuerdruck ein Vorratsdruck von der Druckkammer (65) in die Arbeitskammer (54, 55) auf der von der Steuerdruckkammer (43) abgewandten Seite des Relaisventilkolbens (39) gelangt, und dass bei Entlastung des Steuerdrucks der Druck in der Arbeitskammer (54, 55) einem Druckmittelbehälter zurückgeführt oder zur Umgebung entlüftet wird, **dadurch gekennzeichnet, dass** das Gehäuse (2) wenigstens eine einseitig geschlossene, die Steuerdruckkammer (43), die Arbeitskammer (54, 55) und die Druckkammer (65) bildende zylindrische Aufnahme (43; 54, 55; 65) zur Anordnung des Relaisventilkolbens (39), des gehäusefesten Einsatzes (50) sowie eines Trägerelements (56) für das Plattenventil (59) aufweist, welche in der genannten Reihenfolge axial in die Aufnahme (43; 54, 55; 65) einführbar sowie darin fixierbar sind.

2. Ventilanordnung nach Anspruch 1, **dadurch gekennzeichnet, dass** das wenigstens eine Magnetventil (14, 18, 23) am Gehäuse (2) auf der geschlossenen Seite der Aufnahme (43; 54, 55; 65) angeordnet ist, und dass Kanäle (30, 31, 32, 66) zwischen dem wenigstens einen Magnetventil (14, 18, 23) und dem wenigstens einen Relaisventil (72), zwischen dem wenigstens einen Magnetventil (14, 18, 23) und einem Anschluss (7) für Vorratsdruck sowie zwischen dem wenigstens einen Magnetventil (14, 18, 23) und einem Druckentlastungsbereich (Geräuschdämpfer 69) im Gehäuse (2) im Wesentlichen achsparallel oder senkrecht zur Längsachse der zylindrischen Aufnahme (43; 54, 55; 65) verlaufen.

3. Ventilanordnung nach Anspruch 1 oder 2, **dadurch gekennzeichnet, dass** das wenigstens eine Magnetventil (14, 18, 23) und das Relaisventil (72) getrennte Kanäle (15, 16, 17; 19, 20, 21, 22; 29, 31, 32, 34, 35, 37, 38) für die Steuerdruckbeaufschlagung und die Steuerdruckentlastung aufweisen.

4. Ventilanordnung nach Anspruch 1, 2 oder 3, **dadurch gekennzeichnet, dass** die Aufnahme (43; 54, 55; 65) des Gehäuses (2) mit dem eingeführten Relaisventilkolben (39), dem gehäusefesten Einsatz (50) und dem Trägerelement (56) mittels einer Siebplatte (5, 5a, 5b) verschlossen ist.

5. Ventilanordnung nach Anspruch 4, **dadurch gekennzeichnet, dass** die Siebplatte (5, 5a) an das Gehäuse (2) angeschraubt ist.

6. Ventilanordnung nach Anspruch 4 oder 5, **dadurch gekennzeichnet, dass** die Siebplatte (5, 5a) quer zur Aufnahme (43; 54, 55; 65) in einen Schlitz (70) im Gehäuse (2) eingeschoben ist.

7. Ventilanordnung nach Anspruch 6, **dadurch gekennzeichnet, dass** die Siebplatte (5b) mittels wenigstens einer Befestigungsschraube (6) im Schlitz (70) fixiert ist.

8. Ventilanordnung nach Anspruch 6, **dadurch gekennzeichnet, dass** die Siebplatte (5b) eine Rastnase (71) aufweist, die eine Schlitzbegrenzung (73) im eingeschobenen Zustand der Siebplatte (5b) hintergreift.

9. Ventilanordnung nach einem der Ansprüche 1 bis 8, **dadurch gekennzeichnet, dass** das Trägerelement (56) einen Aufnahmeraum (74) für einen Geräuschdämpfer (69) aufweist.

10. Ventilanordnung nach einem der Ansprüche 1 bis 3, **dadurch gekennzeichnet, dass** die Aufnahme (43; 54, 55; 65) des Gehäuses (2) mit dem eingeführten Relaisventilkolben (39), dem Einsatz (50) und dem Trägerelement (56) mittels eines mit dem Gehäuse (2) der Ventilanordnung (1) lösbar verbindbaren Geräuschdämpfers verschlossen ist, und dass die in die Aufnahme (43; 54, 55; 65) eingeführten Relaisventilelemente (39, 50, 56) dadurch fixiert sind.

11. Nutzfahrzeug, **gekennzeichnet durch** wenigstens eine Ventilanordnung (1) nach einem der Ansprüche 1 bis 10.

12. Verwendung wenigstens einer als Achsmodulator oder als elektronische Luftaufbereitungseinrichtung oder als elektromagnetische Feststellbremseinrichtung ausgebildete Ventilanordnung (1) nach einem der Ansprüche 1 bis 10 in einem Druckluftsystem eines Fahrzeugs.

## Claims

1. Valve arrangement (1) for brake control of a vehicle braking system which is operated using pressure medium, having at least one relay valve (72) which is arranged in a housing (2) and at least one solenoid valve (14, 18, 23) for controlling the relay valve (72), wherein the relay valve (72) has an axially displaceable relay valve piston (39) with an annular sealing seat (41) which can be acted on with a control pressure which is directed into a control pressure chamber (43) and which is adjusted by means of the at least one solenoid valve (14, 18, 23), having an axially displaceable plate valve (59) having a radial sealing face (60), and having an insert (50) which is secured to the housing and which separates an operating chamber (54, 55) from a pressure chamber (65) and which has an annular sealing seat (51) which is arranged coaxially relative to the annular sealing seat (41) of the relay valve piston (39), wherein the sealing seats (41, 51) mentioned cooperate simultaneously or alternately with the radial sealing face (60) of the plate valve (59) in such a manner that, when control pressure is applied, a storage pressure from the pressure chamber (65) reaches the operating chamber (54, 55) at the side of the relay valve piston (39) which is remote from the control pressure chamber (43), and, when the control pressure is relieved, the pressure in the operating chamber (54, 55) is returned to a pressure medium container or is vented to the environment, **characterised in that** the housing (2) has at least one cylindrical receiving member (43; 54, 55; 65) which is closed at one side and which forms the control pressure chamber (43), the operating chamber (54, 55) and the pressure chamber (65) for arrangement of the relay valve piston (39), the insert (50) which is secured to the housing and a carrier element (56) for the plate valve (59) which can be axially introduced into the receiving member (43; 54, 55; 65) in the sequence mentioned and fixed therein.

2. Valve arrangement according to Claim 1, **characterised in that** the at least one solenoid valve (14, 18, 23) is arranged on the housing (2) at the closed side of the receiving member (43; 54, 55; 65) and **in that** channels (30, 31, 32, 66) between the at least one solenoid valve (14, 18, 23) and the at least one relay valve (72), between the at least one solenoid valve (14, 18, 23) and a connection (7) for storage pressure and between the at least one solenoid valve (14, 18, 23) and a pressure relief region (noise damper 69) extend in the housing (2) in a substantially axially parallel manner or perpendicularly relative to the longitudinal axis of the cylindrical receiving member (43; 54, 55; 65) .

3. Valve arrangement according to Claim 1 or 2, **characterised in that** the at least one solenoid valve (14, 18, 23) and the relay valve (72) have separate channels (15, 16, 17; 19, 20, 21, 22; 29, 31, 32, 34, 35, 37, 38) for the application of control pressure and the relief of control pressure.

4. Valve arrangement according to Claim 1, 2 or 3, **characterised in that** the receiving member (43; 54, 55; 65) of the housing (2) with the introduced relay valve piston (39), the insert (50) which is secured to the housing and the carrier element (56) is closed by means of a sieve plate (5, 5a, 5b).

5. Valve arrangement according to Claim 4, **characterised in that** the sieve plate (5, 5a) is screwed to the housing (2).

6. Valve arrangement according to Claim 4 or 5, **characterised in that** the sieve plate (5, 5a) is inserted transversely relative to the receiving member (43; 54, 55; 65) into a slot (70) in the housing (2).

7. Valve arrangement according to Claim 6, **characterised in that** the sieve plate (5b) is fixed in the slot (70) by means of at least one fixing screw (6).

8. Valve arrangement according to Claim 6, **characterised in that** the sieve plate (5b) has a catch projection (71) which engages behind a slot delimitation (73) in the inserted state of the sieve plate (5b).

9. Valve arrangement according to any one of Claims 1 to 8, **characterised in that** the carrier element (56) has a receiving space (74) for a noise damper (69).

10. Valve arrangement according to any one of Claims 1 to 3, **characterised in that** the receiving member (43; 54, 55; 65) of the housing (2) with the inserted relay valve piston (39), the insert (50) and the carrier element (56) is closed by means of a noise damper which can be releasably connected to the housing (2) of the valve arrangement (1), and **in that** the relay valve elements (39, 50, 56) which are introduced into the receiving member (43; 54, 55; 65) are thereby fixed.

11. Utility vehicle, **characterised by** at least one valve arrangement (1) according to any one of Claims 1 to 10.

12. Use of at least one valve arrangement (1) which is constructed as an axle modulator or an electronic air preparation device or an electromagnetic parking brake device in accordance with any one of Claims 1 to 10 in a compressed air system of a vehicle.

## Revendications

1. Ensemble (1) de soupape pour la commande des freins d'une installation de freinage d'un véhicule fonctionnant avec un fluide sous pression, l'ensemble présentant
au moins une soupape-relais (72) disposée dans un boîtier (2) et au moins une soupape magnétique (14, 18, 23) qui commande la soupape-relais (72),
la soupape-relais (72) présentant un piston (39) de soupape-relais coulissant axialement et doté d'un siège d'étanchéité annulaire (41) sur lequel peut être appliquée une pression pilote amenée dans une chambre (43) sous pression pilote et établie par la ou les soupapes magnétiques (14, 18, 23),
une soupape (59) de plateau coulissant axialement et présentant une surface d'étanchéité radiale (60), et
une garniture (50) fixe dans le boîtier, séparant une chambre de travail (54, 55) d'une chambre sous pression (65) et dotée d'un siège d'étanchéité annulaire (51) disposé coaxialement par rapport au siège d'étanchéité annulaire (41) du piston (39) de la soupape-relais,
lesdits sièges d'étanchéité (41, 51) coopérant simultanément ou en alternance avec la surface d'étanchéité radiale (60) de la soupape (59) de plateau de telle sorte que lorsque la pression pilote est appliquée, une pression de réserve aille de la chambre sous pression (65) à la chambre de travail (54, 55) sur le côté du piston (39) de la soupape-relais non tourné vers la chambre (43) sous pression pilote et que lors du délestage de la pression pilote, la pression qui règne dans la chambre de travail (54, 55) soit amenée dans un récipient à fluide sous pression ou soit évacuée dans l'environnement,
**caractérisé en ce que**
le boîtier (2) présente au moins un logement (43; 54, 55; 65) cylindrique fermé d'un côté, formant la chambre (43) à pression pilote, la chambre de travail (54, 55) et la chambre sous pression (65), pour le placement du piston (39) de la soupape-relais, de la garniture (50) fixe par rapport au boîtier ainsi que d'un élément de support (56) de la soupape (59) de plateau qui peuvent être insérés et immobilisés axialement dans la succession indiquée dans le logement (43; 54, 55; 65).

2. Ensemble de soupape selon la revendication 1, **caractérisé en ce que** la ou les soupapes magnétiques (14, 18, 23) sont disposées sur le boîtier (2) du côté fermé du logement (43; 54, 55; 65) ou **en ce que** des canaux (30, 31, 32, 66) s'étendent entre la ou les soupapes magnétiques (14, 18, 23) et la ou les soupapes-relais (72), entre la ou les soupapes magnétiques (14, 18, 23) et un raccord (7) de la pression de réserve ainsi qu'entre la ou les soupapes magnétiques (14, 18, 23) et une partie de délestage de pression (atténuateur de bruit 69) prévue dans le boîtier (2), essentiellement selon des axes parallèles ou perpendiculairement à l'axe longitudinal du logement cylindrique (43; 54, 55; 65).

3. Ensemble de soupape selon les revendications 1 ou 2, **caractérisé en ce que** la ou les soupapes magnétiques (14, 18, 23) et la soupape-relais (72) présentent des canaux (15, 16, 17; 19, 20, 21, 22; 29, 31, 32, 34, 35, 37, 38) séparés pour l'application de la pression pilote et pour le délestage de la pression pilote.

4. Ensemble de soupape selon les revendications 1, 2 ou 3, **caractérisé en ce que** le logement (43; 54, 55; 65) du boîtier (2) dans lequel le piston (39) de la soupape-relais, la garniture (50) fixe par rapport au boîtier et l'élément de support (56) ont été insérés est fermé au moyen d'une plaque perforée (5, 5a, 5b).

5. Ensemble de soupape selon la revendication 4, **caractérisé en ce que** la plaque perforée (5, 5a) est vissée sur le boîtier (2).

6. Ensemble de soupape selon les revendications 4 ou 5, **caractérisé en ce que** la plaque perforée (5, 5a) est insérée dans le boîtier (2) dans une fente (70), transversalement par rapport au logement (43; 54, 55; 65) .

7. Ensemble de soupape selon la revendication 6, **caractérisé en ce que** la plaque perforée (5b) est fixée dans la fente (70) au moyen d'au moins une hélice de fixation (6).

8. Ensemble de soupape selon la revendication 6, **caractérisé en ce que** la plaque perforée (5b) présente un bec d'encliquetage (71) qui accroche par l'arrière une limite (73) de la fente lorsque la plaque perforée (5b) a été insérée.

9. Ensemble de soupape selon l'une des revendications 1 à 8, **caractérisé en ce que** l'élément de support (56) présente un espace de réception (74) pour un atténuateur de bruit (69).

10. Ensemble de soupape selon l'une des revendications 1 à 3, **caractérisé en ce que** le logement (43; 54, 55; 65) du boîtier (2), dans lequel le piston (39) de la soupape-relais, la garniture (50) et l'élément de support (56) ont été insérés, est fermé au moyen d'un atténuateur de bruit qui peut être relié de manière libérable au boîtier (2) de l'ensemble de soupape (1) et **en ce que** les éléments (39, 50, 56) de la soupape-relais insérée dans le logement (43; 54, 55; 65) sont ainsi immobilisés.

11. Véhicule utilitaire **caractérisé par** au moins un ensemble de soupape (1) selon l'une des revendications 1 à 10.

12. Utilisation d'au moins un ensemble de soupape (1) configuré comme modulateur axiale, comme dispositif électronique de préparation d'air ou comme dispositif électromagnétique de frein de stationnement, selon l'une des revendications 1 à 10, dans le système d'air comprimé d'un véhicule.
